Europäisches Patentamt

European Patent Office

Office européen des brevets

(11) Veröffentlichungsnummer: **0 247 412**
**B1**

# EUROPÄISCHE PATENTSCHRIFT

(45) Veröffentlichungstag der Patentschrift: 05.09.90

(21) Anmeldenummer: 87106693.2

(22) Anmeldetag: 08.05.87

(51) Int. Cl.⁵: **C 08 L 81/02** // (C08L81/02, 51:00)

(54) Schlagzähe Polyarylensulfidmassen.

(30) Priorität: 14.05.86 DE 3616131

(43) Veröffentlichungstag der Anmeldung:
02.12.87 Patentblatt 87/49

(45) Bekanntmachung des Hinweises auf die Patenterteilung:
05.09.90 Patentblatt 90/36

(84) Benannte Vertragsstaaten:
BE DE FR GB IT

(56) Entgegenhaltungen:
EP-A-0 142 825

(73) Patentinhaber: BAYER AG
D-5090 Leverkusen 1 Bayerwerk (DE)

(72) Erfinder: Bier, Peter, Dr.
z.Zt.Mobay Corporation
Pittsburgh, PA 21505 (US)
Erfinder: Reinking, Klaus, Dr.
Robert-Stolz-Strasse 16b
D-5632 Wermelskirchen (DE)
Erfinder: Bottenbruch, Ludwig, Dr.
Woehlerstrasse 5
D-4150 Krefeld (DE)
Erfinder: Tresper, Erhard, Dr.
Moerser Strasse 394
D-4150 Krefeld (DE)

Courier Press, Leamington Spa, England.

# EP 0 247 412 B1

## Beschreibung

Die Erfindung betrifft Formmassen aus Polyarylensulfid und Pfropfpolymeren mit verbesserter Schlagzähigkeit und besserer Rißbeständigkeit bei gleichzeitiger Verbesserung der Fließfähigkeit.

Polyarylensulfide sind bekannte brauchbare Spritzgußmassen für hochbeanspruchte Spritzgußteile. Eine der wichtigsten Eingenschaften von Spritzgußmassen ist ihre Festigkeit gegenüber schlagartiger Beanspruchung sowie eine gute Rißbeständigkeit. Gute Rißbeständigkeit ist besonders wichtig für die Verarbeitung von Spritzgußmassen zu dickwandigen Teilen. Eine Anhebung der Schlagzähigkeit von Polyarylensulfiden ist z.B. durch Zusatz von Silikonkautschuken, Ethylen-Propylenkautschuken, Ethylen-Acrylsäurekautschuken u.a. möglich (EP 0 142 825).

Es wurde nun gefunden, daß die Schlagzähigkeit und/oder Rißbeständigkeit von Polyarylensulfiden durch Zusatz von bestimmten Acrylatpropfcopolymeren bei gleichzeitiger Anhebung der Fließfähigkeit und ausgezeichneter Phasenverträglichkeit wesentlich verbessert werden kann.

Gegenstand der Erfindung sind schlagzähe, rißbeständige und leicht fließende Polyarylensulfidspritzgußmassen enthaltend

I. 40 bis 98, vorzugsweise 50 bis 65 Gew.-Teile eines Polyarylensulfids mit einer Schmelzviskosität von mindestens 5 Pas, vorzugsweise von mindestens 50 Pas bis 3000 Pas (gemessen bei 306°C und einer Schubspannung von $10^2$ Pa).

II. 2 bis 30, vorzugsweise 5 bis 20 Gew.-Teile eines Pfropfpolymerisats aus
(A) 25 bis 95 Gew.-Teilen eines Copolymerisats von
(a) 75 bis 99,8 Gew.-Teilen eines $C_1$—$C_6$-Alkylacrylats
(b) 0,1 bis 5 Gew.-Teilen eines Monomeren mit mindestens 2 nichtkonjugierten olefinischen Dooppelbindungen und
(c) 0 bis 40 Gew.-Teilen weiterer Monomerer
(B) 75 bis 5 Gew.-Teilen eines durch Polymerisation mindestens eines olefinisch ungesättigten Monomeren erhaltenen Harzes, das in Gegenwart von (A) hergestellt worden ist, und
III. 0 bis 300 Gew.-Teile Füll- und/oder Verstärkungsmittel.

Ein weiterer Gegenstand der Erfindung ist ein Verfahren zur Herstellung dieser Polyarylensulfid-Formmassen durch Homogenisieren der Komponenten I bis III in der Schmelze.

Ein weiterer Gegenstand der Erfindung ist die Verwendung dieser Polyarylensulfid-Formmassen zur Herstellung von Formkörpern, insbesondere von Spritzgußartikeln.

Polyarylensulfide lassen sich auf bekannte Weise aus Dihalogenaromaten und Alkalisulfiden in Lösung herstellen (z.B. US—PS 2 513 188).

Die Pfropfpolymerisate II werden durch Polymerisation von olefinisch ungesättigten Monomeren in Gegenwart der Prepolymere (A) erhalten, wobei ein wesentlicher Teil der Monomeren auf das Prepolymer A) aufgepfropft wird. Die Herstellung derartiger Pfropfpolymerisate ist bekannt (z.B. R. J. Ceresa, Block and Graft Copolymers, Butterworth, London 1962).

Erfindungsgemäß werden Pfropfpolymerisate II bevorzugt, die kautschukelastische Eigenschaften besitzen und deren Glasübergangstemperatur unterhalb von +10°C, insbesondere von −150° bis −20°C, vorzugsweise von −80 bis −30°C, liegt. Die Ermittlung der Glasübergangstemperatur kann dabei nach B. Vollmert, Grundriß der Makromolekularen Chemie, Seiten 406—410, Springer-Verlag, Heidelberg, 1962, erfolgen.

Bevorzugtes $C_1$—$C_6$-Alkylacrylat (a) ist n-Butylacrylat. Bevorzugte Monomere (b) mit mindestens zwei nicht konjugierten Doppelbindungen pro Molekül sind Polyacryl- und Polymethacrylsäureester von mehrwertigen Alkoholen, insbesondere solchen mit 2 bis 8 C-Atomen und 2 bis 4 Hydroxylgruppen, z.B. Butylendiacrylat und -dimethylacrylat, Trimethylolpropantrimethacrylat; Di- und Trivinylbenzol, Vinylacrylat und -methacrylat; Alkylester ungesättigter Mono- und Dicarbonsäuren wie z.B. Alkylacrylat und -methacrylat, Dialkylmaleat, -fumarat und -itaconat, Malein-, Fumar- und Itaconsäuremonoalkylester; Dialkylester von Polycarbonsäuren, die keine polymerisationsfähige Doppelbindung enthalten.

Besonders bevorzugte Monomere (b) sind Butylendiacrylat, Allylmethacrylat und Diallylmaleat.

Bevorzugte Monomere (c) sind Ethylen, Isopren, Vinylether, Butadien, Styrol, Vinylester, Vinylhalogenide, vinylsubstituierte heterocyclische Verbindungen wie Vinylpyrrolidon, Acrylnitril und Mischungen dieser Monomeren.

Bevorzugte olefinisch ungesättigte Monomere zur Herstellung des Anteils (B) sind $C_1$—$C_4$-Alkylacrylate und -methacrylate, Styrol und Acrylnitril. Vorzugsweise enthalten diese zur Herstellung des Anteils (B) verwendete Monomeren mindestens 50 Gew.-% $C_1$—$C_4$-Alkylmethacrylat.

Es ist vorteilhaft, wenn die Pfropfpolymerisate II einen beträchtlichen Gehalt an polaren Gruppen aufweisen. Zweckmäßig wählt man Produkte aus, die zu mehr als 10 Gew.-% aus (Meth)-Acrylsäureestern und (Meth)-Acrylnitril aufgebaut sind. Sofern der Gehalt an (Meth)-Acrylestern mehr als 70 Gew.-% beträgt, verzichtet man zweckmäßig auf (Meth)-Acrylnitril als Baustein.

Bevorzugte Pfropfpolymerisate II sind solche aus
60—95 Gew.-% Pfropfgrundlage und
40—5 Gew.-% Pfropfauflage, wobei die Pfropfgrundlage aus einem Monomerengemisch enthaltend
95—99,8 Gew.-% Butylacrylat,
0,1—2,5 Gew.-% Butylendiacrylat und

2

# EP 0 247 412 B1

0,1—2,6 Gew.-% Allylmethacrylat oder Diallylmaleat und die Pfropfauflage zu
60—100 Gew.-% aus Methylmethacrylat und
40—0 Gew.-% anderer Monomerer
erhältlich sind.

Die bevorzugten Pfropfpolymerisate II besitzen einen mittleren Teilchendurchmesser $d_{50}$ (gemessen mittels Ultrazentrifuge nach W. Sholtan, H. Lange, Kolloid, Z.u.Z. Polymere 250, 782—796 (1972)) von 0,2 bis 0,6, vorzugsweise 0,3 bis 0,5 µm.

Die Herstellung der Prepolymeren und die der Pfropfpolymerisate II erfolgt in üblicher Weise, vorzugsweise durch Emulsionspolymerisation mit üblichen radikalischen Initiatoren, Emulgatoren und Reglern in wäßriger Emulsion bzw. Dispersion. Die Herstellung geeigneter Pfropfpolymerisate ist beispielsweise in den DE—PS 1 260 135 und 1 238 207 beschrieben.

Besonders bevorzugte Pfropfpolymerisate II lassen sich nach üblichen Emulsionspolymerisationsverfahren in mehreren Stufen aus n-Butylacrylat, 1,3-Butylendiacrylat und Diallylmaleat in erster Stufe und Methylmethacrylat in zweiter Stufe herstellen, wobei das bevorzugte Monomerverhältnis (bezogen auf Gewicht) etwa 79,2/0,4/20,0 beträgt.

Die Herstellung der Mischung von Polyphenylensulfiden und Pfropfpolymerisaten und gegebenenfalls Füll- und/oder Verstärkungsstoffen kann auf handelsüblichen Mischgeräten durchgeführt werden. Als solche eignen sich Kneter, Einwellen- und Zweiwellenextruder. Für die weitere Verarbeitung kann die erhaltene Mischung nach dem Erstarren der Schmelze granuliert werden.

Die Polyphenylensulfidzusammensetzungen können zusätzlich Füll- und/oder Verstärkungsstoffe in Form von Pulvern, Fasern oder Matten enthalten. Beispiele dafür sind Metalle wie Stahl, Kupfer, Aluminium oder Kohlenstoff. Bevorzugte Füllstoffe sind Quarz, Talk oder Kaolin, bevorzugte Verstärkungsstoffe sind Glasfasern.

Weiterhin können die Massen gegebenenfalls organische und anorganische Pigmente, z.B. $TiO_2$, ZnS, Phthalocyanine, Ruß, Cd-Pigmente, Spinelle oder organische Farbstoffe, Fließhilfsmittel, Entformungsmittel, UV-Absorber und/oder Stabilisatoren enthalten.

Um die Flammfestigkeit der Produkte weiter zu erhöhen können sie zusätzlich übliche flammhindernde Additive enthalten, z.B. solche die Halogen, Phosphor, Phosphor-Stickstoff, gegebenenfalls in Kombination mit Oxiden der Elemente der V Nebengruppe (des Periodensystems der Elemente nach Mendelejew) wie z.B. Antimonoxid, enthalten.

Die Kristallisationsgeschwindigkeit der Polyphenylensulfidmassen kann durch Zusatz von anorganischen oder organischen Keimbildungsmitteln wie z.B. in Kunststoff-Handbuch Vol. VIII. Carl Hanser Verlag, Münschen 1973, Seite 701 beschrieben weiter erhöht werden. Dies wird bei den Spritzgußmassen standardmäßig durchgeführt. Die Mengen betragen 0,05 bis 5, vorzugsweise 0,1 und 1 Gew.-%. Bevorzugtes Keimbildungsmittel ist Mikrotalk.

Die erfindungsgemäßen Polyphenylensulfidmassen sind ausgezeichnete Ausgangsmaterialien für die Herstellung von Folien und Fasern, vorzugsweise für die Herstellung von Formkörpern aller Art durch Spritzguß.

## Beispiele

Die erfindungsgemäßen Polyphenylensulfidmassen wurden durch Mischen und Homogenisieren der Basiskomponenten (siehe Tabelle 1) mit einem 30 mm Werner und Pfleiderer Doppelwellenextruder bei einer Temperatur in der Schmelze von 310°C hergestellt. Die zu Granulat zerhackten Stränge wurden über Nacht getrocknet und mit einer Spritzgußmaschine des Typs Arburg Allrounder zu Prüfstäben verarbeitet an denen Zähigkeitsprüfungen nach DIN oder ASTM durchgeführt wurden. Beispiele 1 und 5 sind erfindungsgemäße Polyphenylensulfidproben mit Acrylatkautschuk. Beispiele 2, 3, 4, 6 und 7 sind Vergleichsbeispiele.

3

TABELLE 1

| Beispiel | 1 | 2 | 3 | 4 | 5 | 6 | 7 |
|---|---|---|---|---|---|---|---|
| PPS[a] [Gew.-%] | 80 | 80 | 80 | 80 | 43 | 100 | 54 |
| Glasfasern[b] [Gew.-%] | — | — | — | — | 45 | — | 45 |
| Mikrotalk[c] [Gew.-%] | — | — | — | — | 1 | — | 1 |
| Acrylat[d] Kautschuk [Gew.-%] | 20 | — | — | — | 11 | — | — |
| Ethylen-Propylen[e] Kautschuk [Gew.-%] | — | 20 | — | — | — | — | — |
| MBS-Kautschuk[f] [Gew.-%] | — | — | 20 | — | — | — | — |
| ABS-Kautschuk[g] [Gew.-%] | — | — | — | 20 | — | — | — |
| Schlagzähigkeit[h] [kJ/m$^2$] | n.g.[1] | 73 | 18 | 49 | — | 10 | — |
| Izod-Schlagzähigk. [J/m] | — | — | — | — | 428 | — | 362 |
| Vicat VST B[k] [°C] | 178 | 158 | — | — | >245 | 180 | >245 |
| Fließspirale[l] bei 300°C [mm] | 780 | 700 | — | — | 680 | 720 | 460 |

[1] n.g. = nicht gebrochen
[a] Polyphenylensulfid mit einer Schmelzviskosität von 145 Pas, gemessen bei 306°C und einer Schubspannung von 100 Pa
[b] CS 7916® der Fa. BAYER AG
[c] Mistron Vapor® der Fa. Cyprus
[d] Acryloid KM 330® der Fa. Rohm & Haas
[e] Buna AP 447® der Fa. BWH
[f] Kane Ace B 28® der Fa. Kanegafuchi
[g] ABS-Kautschuk mit 75% Polybutadienpfropfgrundlage, Teilchengröße 0,4 μm
[h] Schlagzähigkeit nach DIN 53452
[l] Izod-Schlagzähigkeit nach ASTM 256
[k] Vicat B nach DIN 53 460
[e] Fließspirale 20 × 2 mm bei 300°C Massetemperatur und 1000 bar Einspritzdruck

## Patentansprüche

1. Schlagzähe, rißbeständige und leicht fließende Polyarylensulfidspritzgußmassen enthaltend
I.   40 bis 98 Gew.-Teile eines Polyarylensulfids mit einer Schmelzviskosität von mindestens 5 Pas (gemessen bei 306°C und einer Schubspannung von 10$^2$ Pa).
II.   2 bis 30 Gew.-Teile eines Pfropfpolymerisats aus
(A) 25 bis 95 Gew.-Teilen eines Copolymerisats von
(a) 75 bis 99,8 Gew.-Teilen eines C$_1$—C$_6$-Alkylacrylats
(b) 0,1 bis 5 Gew.-Teilen eines Monomeren mit mindestens 2 nichtkonjugierten olefinischen Doppelbindungen und
(c) 0 bis 40 Gew.-Teilen weiterer Monomerer
(B) 75 bis 5 Gew.-Teilen eines durch Polymerisation mindestens eines ungesättigten Monomeren erhaltenen Harzes, das in Gegenwart von (A) hergestellt worden ist, und
III.   0 bis 300 Gew.-Teile Füll- und/oder Verstärkungsmittel.
2. Polyarylensulfidspritzgußmassen gemäß Anspruch 1, gekennzeichnet dadurch, daß das verwendete Polyarylensulfid eine Schmelzviskositat von mindestens 50 Pas bis 3000 Pas aufweist (gemessen bei 306°C und einer Schubspannung von 10$^2$ Pa).
3. Polyarylensulfidspritzgußmassen gemäß Ansprüchen 1 und 2, enthaltend 50—65 Gew.-Tle. der Komponente I und 5—20 Gew.-Tle. der Komponente II.

4. Verfahren zur Herstellung der Formmassen nach Anspruch 1 durch Homogenisieren der Komponenten I bis III in der Schmelze.

5. Verwendung der Formmassen nach Anspruch 1 zur Herstellung von Formkörpern.

6. Verwendung von Formmassen nach Anspruch 1 zur Herstellung von Spritzgußartikeln.

**Revendications**

1. Masses de moulage par injection à base de sulfures de polyarylène, résilientes, résistances aux fissures et s'écoulant bien, contenant

I. 40 à 98 parties en poids d'un sulfure de polyarylène ayant une viscosité à l'état fondu d'au moins 5 Pas (mesure à 306°C sous une force de cisaillement de $10^2$ Pa).

II. 2 à 30 parties en poids d'un polymère greffé de

(A) 25 à 95 parties en poids d'un copolymère de

(a) 75 à 99,8 parties en poids d'un acrylate d'alkyle en $C_1$—$C_6$,

(b) 0,1 à 5 parties en poids d'un monomère contenant au moins deux doubles liaisons oléfiniques non conjuguées et

(c) 0 à 40 parties en poids d'autres monomères,

(B) 75 à 5 parties en poids d'une résine obtenue par polymérisation d'au moins un monomère insaturé, qui a été préparée en présence de (A), et

III. 0 à 300 parties en poids de matières de charge et/ou d'agents renforçants.

2. Masses de moulage par injection à base de sulfures de polyarylène selon la revendication 1, caractérisées en ce que le sulfure de polyarylène utilisé a une viscosité à l'état fondu d'au moins 50 Pas et pouvant aller jusqu'à 3 000 Pas (mesure à 306°C sous une force de cisaillement de $10^2$ Pa).

3. Masses de moulage par injection à base de sulfures de polyarylène selon les revendications 1 et 2, contenant 50 à 65 parties en poids du composant I et 5 à 20 parties en poids du composant II.

4. Procédé de préparation des masses du moulage selon la revendication 1, par homogénéisation des composants 1 à 3 à l'état fondu.

5. Utilisation des masses de moulage selon la revendication 1 pour la préparation d'objets moulés.

6. Utilisation des masses de moulage selon la revendication 1 pour la préparation d'articles moulés par injection.

**Claims**

1. Impact-resistant, crack-resistant and free-flowing polyarylene sulphide injection moulding compounds containing

I. 40 to 98 parts by weight of a polyarylene sulphide having a melt viscosity of at least 5 Pas (measured at 306°C and a shear stress of $10^2$ Pa).

II. 2 to 30 parts by weight of a graft polymer consisting of

(A) 25 to 95 parts by weight of a copolymer of

(a) 75 to 99.8 parts by weight of a $C_1$—$C_6$-alkyl acrylate

(b) 0.1 to 5 parts by weight of a monomer having at least 2 non-conjugated olefinic double bonds and

(c) 0 to 40 parts by weight of further monomers

(B) 75 to 5 parts by weight of a resin obtained by polymerization of at least one unsaturated monomer which has been prepared in the presence of (A) and

III. 0 to 300 parts by weight of fillers and/or reinforcing agents.

2. Polyarylene sulphide injection moulding compounds according to Claim 1, characterized in that the polyarylene sulphide used has a melt viscosity of at least 50 Pas to 3000 Pas (measured at 306°C and a shear stress of $10^2$ Pa).

3. Polyarylene sulphide injection moulding compounds according to Claims 1 and 2, containing 50—65 parts by weight of component I and 5—20 parts by weight of component II.

4. Process for the preparation of the moulding compounds according to Claim 1 by homogenizing components I to III in the melt.

5. Use of the moulding compounds according to Claim 1 for the preparation of moulded articles.

6. Use of the moulding compounds according to Claim 1 for the preparation of injection-moulded articles.